(19) Europäisches Patentamt
European Patent Office
Office européen des brevets

(11) Publication number: **0 217 289 B1**

(12) # EUROPEAN PATENT SPECIFICATION

(45) Date of publication of patent specification: **03.08.94**

(51) Int. Cl.$^5$: **C08L 101/10**, C08L 101/02, C08L 57/06

(21) Application number: **86113192.8**

(22) Date of filing: **25.09.86**

The file contains technical information submitted after the application was filed and not included in this specification

(54) **Curable composition.**

(30) Priority: **30.09.85 JP 218413/85**

(43) Date of publication of application: **08.04.87 Bulletin 87/15**

(45) Publication of the grant of the patent: **03.08.94 Bulletin 94/31**

(84) Designated Contracting States: **BE CH DE FR GB IT LI NL SE**

(56) References cited: **EP-A- 0 050 248**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **Ando, Naotami**
**130-1, Nozoe 3-chome**
**Harima-cho**
**Kako-gun Hyogo-ken(JP)**
Inventor: **Furukawa, Hisao**
**9-30-1219, Maikodai 2-chome**
**Tarumi-ku**
**Kobe-shi Hyogo-ken(JP)**
Inventor: **Kato, Yasushi**
**1-11-3, Katayama-cho**
**Nagata-ku**
**Kobe-shi Hyogo-ken(JP)**

(74) Representative: **Türk, Gille, Hrabal, Leifert**
**Brucknerstrasse 20**
**D-40593 Düsseldorf (DE)**

EP 0 217 289 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a curable composition, and more particularly to a curable composition comprising a compound having a silyl group at the molecular ends and capable of curing at room temperature with moisture, an organotin compound being a silanol condensing catalyst and a mercapto group-containing compound used as a pot life controlling agent. A compound having a silyl functional group capable of curing with moisture at the molecular end is useful for paints, coating agents, adhesives, sealants, and the like.

The curability of the silyl group-containing compound is greatly affected by the kinds of curing agents, and accordingly selection of the curing agents suited for the purposes is indispensable. For instance, a paint composition containing the silyl group-containing compound and organotin compound is poor in balance between the pot life, the appearance and the curability, and may cause problems in practical use, e.g. the use as automotive refinishing paint. That is to say, when the content of the organotin compound is decreased, though the pot life and the appearance are satisfactory, the curability is poor. On the other hand, when the content of the organotin compound increased, though the curability is satisfactory for practical use, the pot life and the appearance are remarkably lowered.

An object of the present invention is to provide a curable composition having well balanced pot life and curability and providing a cured product having good appearance.

The above and other objects of the present invention will become apparent from the description hereinafter.

It has now been found that when a mercapto group-containing compound is added to an organotin compound, the mixture can be used as an important curing agent, and by the use of the combination, the pot life of a composition and the appearance of the cured product are improved and the catalytic activity is scarcely lowered.

In accordance with the present invention, there is provided a curable composition comprising as effective components:

(A) at least one member selected from the group consisting of a polyester, an ether ester block-copolymer, a vinyl polymer, a diallyl phthalate compound, a diallyl phthalate copolymer and an epoxy compound, the component (A) having in its molecule at least one silyl group represented by the formula (I):

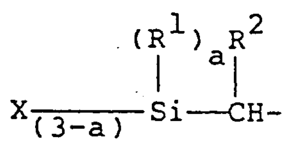

(I)

wherein $R^1$ and $R^2$ are the same or different and each is hydrogen or a monovalent hydrocarbon group having 1 to 10 carbon atoms selected from the group consisting of alkyl group, aryl group and aralkyl group; X is a halogen atom or a group selected from the group consisting of an alkoxyl group, an acyloxyl group, a ketoxymate group, amide group, an acid amide group, aminoxy group and mercapto group; and a is 0, 1 or 2,

(B) an organotin compound, and

(C) a mercapto group-containing compound, selected from the group consisting of an alkyl mercaptan, a mercapto group-containing carboxylic acid, a mercapto group-containing ester compound, a mercapto group-containing polyether and a mercapto group-containing thiophenol and thiobenzoic acid,

whereby the amount of component (B) is from 0.0001 to 50 parts by weight based on 100 parts by weight of compound (A), and the amount of component (C) is from 0.000005 to 1000 parts by weight based on 100 parts by weight of compound (A).

In the present invention, the silyl group-containing compound (A) can be prepared in various processes. As processes for preparing the silyl group-containing compound (A), there are, for instance, (1) a process by hydrosilylation of a vinyl resin having carbon-carbon double bond with hydrosilane, (2) a process by copolymerization of a vinyl compound and a silyl compound having a copolymerizable double bond, (3) a process by reaction of a compound having epoxy group with aminosilane or mercaptosilane. The processes (1) and (2) are described e.g. in JP-A-36395/1979 and 63351/1982, and in JP-B-1423/1984. In the process (3), the epoxy compound can be obtained by reacting the epoxy resin such as a bisphenol A epoxy resin, an epoxyuretane epoxy resin or a novolac epoxy resin with the aminosilane compound such as γ-aminopropyltrimethoxysilane, γ-aminopropyltriethoxysilane or γ-(2-aminoethyl)-aminopropyltrimethoxysilane or the mercaptosilane compound such as γ-mercaptopropyltrimethoxysilane. The reaction is carried out by mixing the above components with stirring at 70° to 80°C for several hours in a solvent such as toluene or xylene in the absence of water.

The silyl group-containing compound (A) has in its molecule at least one silyl group represented by the formula (I):

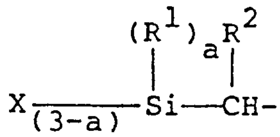

(I)

wherein $R^1$ and $R^2$ are the same or different and each is hydrogen atom or a monovalent hydrocarbon group having 1 to 10 carbon atoms selected from the group consisting of alkyl group, aryl group and aralkyl group, X is a halogen atom or a group selected from the group consisting of an alkoxyl group having preferably 1 to 5 carbon atoms, an acyloxy group having preferably 2 to 6 carbon atoms, a ketoxymate group, amide group, acid amide group, aminoxy group and mercapto group, and a is 0, 1 or 2.

The silyl group-containing compounds (A) used in the invention are desired to have a molecular weight within the range of 200 to 30,000, though the molecular weight thereof is not particularly limited thereto. The silyl group containing compound (A) may be employed alone or admixture thereof.

In the invention, silyl group-containing compounds (A) are selected from the group consisting of a polyester, an ether ester block-copolymer, a vinyl polymer, a diallyl phthalate compound, a diallyl phthalate copolymer and an epoxy compound.

Examples of the polyester are, for instance, a polyester composed of phthalic anhydride with allyl glycidyl ether, γ-glycidoxypropyltrimethoxysilane or propylene oxide. It is preferable that the silyl group-containing polyester has a molecular weight of 300 to 8,000. Examples of the ether ester block-copolymer are, for instance, a polyether ester composed of the above-mentioned polyester and alkylene oxide polymer such as polyethylene oxide or polypropylene oxide. It is preferable that the silyl group-containing ether ester block-copolymer has a molecular weight of 300 to 20,000, and that the ether moiety in the ether ester block-copolymer has a molecular weight of 100 to 500. Examples of the vinyl polymer are, for instance, vinyl polymers composed of at least one member selected from styrene, methyl methacrylate, allyl methacrylate and γ-methacryloxypropyltrimethoxysilane. It is preferable that the silyl group-containing vinyl polymer has a molecular weight of 300 to 20,000, and that the vinyl polymer includes acrylic ester or methacrylic ester. Examples of the diallyl phthalate compound or the diallyl phthalate copolymer are, for instance, diallyl phthalate monomer or prepolymer, a copolymer of diallyl phthalate monomer or prepolymer with acrylic ester or methacrylic ester. There are preferable the silyl group-containing diallyl phthalate monomer, the silyl group-containing diallyl phthalate prepolymer having a molecular weight of not more than 20,000, and the silyl group-containing copolymer of diallyl phthalate and an acrylic ester or a methacrylic ester having a molecular weight of 300 to 20,000. Examples of the acrylic or methacrylic ester are, for instance, alkyl acrylate or methacrylate such as methyl acrylate, methyl methacrylate, butyl acrylate or butyl methacrylate, allyl acrylate or methacrylate, stearyl acrylate or methacrylate, γ-acryloxypropyltrimethoxysilane and γ-methacryloxypropyltrimethoxysilane. In the copolymer of the diallyl phthalate and the acrylic ester or the methacrylic ester, it is preferable that the content of diallyl phthalate is from 5 to 100 % by mole.

As the organotin compound (B) used in the present invention, there are preferable, for instance, carboxylic acid organotin compounds such as tin octate, dibutyl tin dilaurate and dioctyl tin maleate, sulfide or mercapto organotin compounds such as monobutyl tin sulfide and dioctyl tin mercaptide, organotin oxides such as dioctyl tin oxide, compounds obtained by reacting organotin oxides with ester compounds such as ethyl silicate, Ethyl Silicate 40 (commercial name of partially hydrolyzed ethyl silicate made by Nippon Unicar Co., Ltd.) and dimethyl maleate and dioctyl phthalate. The amount of the catalyst (B) is from 0.0001 to 50 parts by weight, preferably from 0.001 to 30 parts by weight, based on 100 parts by weight of the silyl group-containing compound (A).

As the mercapto group-containing compound (C) used in the present invention, there are exemplified, for instance, alkyl mercaptans such as n-dodecyl mercaptan and tert-butyl mercaptan, mercapto group-containing carboxylic acids such as 2-mercaptopropionic acid and thiosalicylic acid, mercapto group-containing ester compounds such as 2-ethylhexyl thioglycolate, mercapto group-containing polyethers such as as CAPICURE 3-800® (a polyether having mercapto groups at the side ends) commercially available

from Diamond Shamrock Corp., and a mercapto group-containing thiophenol and thiobenzoic acid. Among them, n-dodecyl mercaptan is preferable. The amount of the mercapto group-containing compound (C) is from 0.05 to 20 parts by weight, preferably from 0.1 to 10 parts by weight, per part by weight of the organotin compound (B).

The organotin compound (B) and the mercapto group-containing compound (C) may be added to the silyl group-containing compound (A) separately or in the state of a mixture previously prepared by mixing them in a predetermined ratio.

The composition according to the present invention can be prepared into a two-package composition in which prior to the use, a composition containing the silyl group-containing compound (A) is admixed with a composition containing the organotin compound (B) and the mercapto group-containing compound (C), or can be prepared into a one-package composition in which a stabilizer is added to a mixture of components (A), (B) and (C) and the mixture is stored in the state of no moisture being incorporated therein and is used as it is.

A solvent may be employed in the present invention. The amount of the solvent varies depending on the molecular weight of the silyl group-containing compound and the proportions of the used components, and is selected according to the concentration of solids matter or viscosity of the composition required in practical use. Examples of the solvent are, for instance, toluene, xylene and butyl acetate.

The composition of the present invention can further contain usual additives such as various fillers, pigments, ultraviolet absorbents, antioxidants, delustering agents and levelling agents in known effective concentrations.

The composition of the present invention is curable in a wide temperature range from room temperature to high temperature in a short period of time, and provides a cured product having excellent properties such as adhesion and weatherability. Accordingly, the composition of the invention is useful for various purposes, e.g. paints, coating materials, primers and adhesives for the surfaces of inorganic and organic materials. The composition is particularly suitable as an anti-corrosive finishing paint for a bridge, a top coat, an automotive refinishing paint and a paint for the surfaces of organic materials, because it is curable at a low temperature.

It is possible to blend the composition of the invention-with various resins used in paints, coating materials, primers and adhesives. Therefore, the composition of the invention can be admixed in suitable proportions, for instance, with lacquer, acrylic lacquer, thermosetting acrylic paint, alkyd paint, melamine paint, epoxy paint or silicone paint, whereby the physical properties such as adhesion and weathering resistance of these paints or coatings can be improved.

The present invention is more specifically described and explained by means of the following Examples in which all parts and % are by weight unless otherwise noted.

## Preparation Example 1

A mixture of 150 g of styrene, 300 g of butyl acrylate, 430 g of methyl methacrylate, 100 g of $\gamma$-methacryloyloxypropyltrimethoxysilane, 20 g of acrylamide and 18 g of azobisisobutyronitrile was added dropwise to 450 g of xylene heated at 110°C under reflux for 5 hours, to which a mixture of 1 g of azobisisobutyronitrile and 90 g of xylene was further added dropwise for 1 hours, and the post-polymerization was carried out for 2 hours to give a solution having a solid concentration of 64 %. The viscosity of the obtained solution was 120 poises at 25°C. The obtained silyl group-containing compound had a number average molecular weight of 10,000 measured by gel permeation chromatography.

## Examples 1 to 4 and Comparative Example 1

There was diluted 156 parts of the silyl group-containing compound obtained in Preparation Example 1 with xylene so that the solid concentration was 35 %, to which 2 parts of dioctyl tin maleate and 1 part of each of mercapto group-containing compounds shown in Table 1 were added to give a curable composition. The obtained composition was sprayed on a mild steel plate previously coated with a lacquer primer surfacer. After allowing to stand at 20°C for 30 minutes for setting, the curability at 60°C, the pot life at 20°C and other physical properties were measured.

The above procedure was repeated except that the mercapto group-containing compound was not used.

The results are shown in Table 1.

In the Examples, the measurement was made as follows:

[Appearance]

A surface of a clear coating of the composition formed on the above-mentioned lacquer undercoat is observed.

Evaluation

O : Excellent
X : Bad

[Curability (Masking property)]

After setting a coating, a masking tape (pressure-sensitive adhesive tape No. 720 made by Nitto Electric Industrial Co., Ltd.) is stuck onto the coating at 60°C at prescribed intervals and the time till when a mark of the tape was not left on the coating or observing the state of the mark of the tape is measured.

[Pot life]

In a 100 ml cup is placed 70 g of the composition, and it is allowed to stand at 20°C in the opened state for 2 hours. The initial viscosity (14 seconds) and the viscosity after 2 hours ($\eta_{2h}$) are measured by using Ford cup #4 provided in ASTM (American Society for Testing Materials) D-1200-58.

The change of viscosity (second) = $\eta_{2h}$ - 14

[Pencil hardness]

The pencil hardness of the cured coating is measured according to JIS K5400.

Table 1

| | Mercapto group-containing compound | Curability (Masking property) at 60°C (hours) | Pot life (Change of viscosity) (second) | Appearance After 30 minutes at 60°C and 7 days at room temperature | Pencil hardness |
|---|---|---|---|---|---|
| Ex. 1 | n-Dodecylmercaptan | 1 | 2.0 | ○ | H |
| Ex. 2 | 2-Ethylhexyl thioglycolate | 1 | 1.2 | ○ | H |
| Ex. 3 | CAPICURE 3-800 | 1 | 1.5 | ○ | H |
| Ex. 4 | Thiobenzoic acid | 1 | 0.8 | ○ | H |
| Com. Ex. 1 | - | 1 | 15.0 | × | H |

## Claims

1. A curable composition comprising a mixture of the effective components:

   (A) at least one member selected from the group consisting of a polyester, an ether ester block-copolymer, a vinyl polymer, a diallyl phthalate compound, a diallyl phthalate copolymer and an-epoxy compound, said Component (A) having in its molecule at least one silyl group represented by the formula (I):

   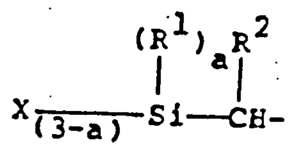

   (I)

   wherein $R^1$ and $R^2$ are the same or different and each is hydrogen atom or a monovalent hydrocarbon group having 1 to 10 carbon atoms selected from the group consisting of an alkyl group, an aryl group and an aralkyl group, X is a halogen atom or a group selected from the group consisting of an alkoxyl group, an acyloxyl group, a ketoxymate group, an amide group, an acid amide group, an aminoxy group and a mercapto group, and a is 0, 1 or 2,

   (B) an organotin compound, and

   (C) a mercapto group-containing compound, selected from the group consisting of an alkyl mercaptan, a mercapto group-containing carboxylic acid, a mercapto group-containing ester compound, a mercapto group-containing polyether and a mercapto group-containing thiophenol and thiobenzoic acid,

   whereby the amount of component (B) is from 0.0001 to 50 parts by weight based on 100 parts by weight of compound (A), and the amount of component(C) is from 0.000005 to 1000 parts by weight based on 100 parts by weight of compound (A).

2. The composition of Claim 1, wherein said component (A) is a polyester having a molecular weight of 300 to 8,000.

3. The composition of Claim 1, wherein said component (A) is an ether ester block-copolymer having a molecular weight of 300 to 20,000.

4. The composition of Claim 1, wherein said component (A) is a vinyl polymer having a molecular weight of 300 to 20,000.

5. The composition of Claim 1, wherein said component (A) is a diallyl phthalate monomer.

6. The composition of Claim 1, wherein said component (A) is a diallyl phthalate prepolymer having a molecular weight of not more than 20,000.

7. The composition of Claim 1, wherein said component (A) is a copolymer of diallyl phthalate with an acrylic or a methacrylic ester, said copolymer having a molecular weight of 300 of 20,000.

8. The composition of Claim 3, wherein an ether moiety in said ether ester block-copolymer has a molecular weight of 100 to 500.

9. The composition of Claim 4, wherein said vinyl polymer is a vinyl polymer including an acrylic ester or a methacrylic ester.

10. The composition of Claim 7, wherein a content of said diallyl phthalate is from 5 to 100 % by mole.

11. The composition of Claim 1, wherein said component (C) is n-dodecyl mercaptan.

12. A method for preparing a curable composition comprising as effective components:

(A) at least one member selected from the group consisting of a polyester, an ether ester block-copolymer, a vinyl polymer, a diallyl phthalate compound, a diallyl phthalate copolymer and an epoxy compound, said component (A) having in its molecule at least one silyl group represented by the formula (I):

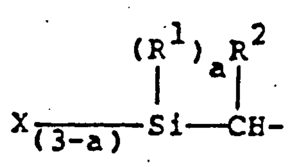

(I)

wherein $R^1$ and $R^2$ are the same or different and each is hydrogen atom or a monovalent hydrocarbon group having 1 to 10 carbon atoms selected from the group consisting of an alkyl group, an aryl group and an aralkyl group, X is a halogen atom or a group selected from the group consisting of an alkoxyl group, an acyloxyl group, a ketoxymate group, an amide group, an acid amide group, an aminoxy group and a mercapto group, and a is 0, 1 or 2,

(B) an organotin compound, and

(C) a mercapto group-containing compound, selected from the group consisting of an alkyl mercaptan, a mercapto group-containing carboxylic acid, a mercapto group-containing ester compound, a mercapto group-containing polyether and a mercapto group-containing thiophenol and thiobenzoic acid,

whereby the amount of component (B) is from 0.0001 to 50 parts by weight based on 100 parts by weight of compound (A), and the amount of component (C) is from 0.000005 to 1000 parts by weight based on 100 parts by weight of compound (A) characterized by admixing compounds (B) and (C) with a separately prepared resin (A).

**13.** The method of Claim 12, wherein said component (A) is a polyester having a molecular weight of 300 to 8,000.

**14.** The method of Claim 12, wherein said component (A) is an ether ester block-copolymer having a molecular weight of 300 to 20,000.

**15.** The method of Claim 12, wherein said component (A) is a vinyl polymer having a molecular weight of 300 to 20,000.

**16.** The method of Claim 12, wherein said component (A) is a diallyl phthalate monomer.

**17.** The method of Claim 12, wherein said component (A) is a diallyl phthalate prepolymer having a molecular weight of not more than 20,000.

**18.** The method of Claim 12, wherein said component (A) is a copolymer of diallyl phthalate with an acrylic or a methacrylic ester, said copolymer having a molecular weight of 300 of 20,000.

**19.** The method of Claim 14, wherein an ether moiety in said ether ester block-copolymer has a molecular weight of 100 to 500.

**20.** The method of Claim 15, wherein said vinyl polymer is a vinyl polymer including an acrylic ester or a methacrylic ester.

**21.** The method of Claim 18, wherein a content of said diallyl phthalate is from 5 to 100 % by mole.

**22.** The method of Claim 12, wherein said component (C) is n-dodecyl mercaptan.

## Patentansprüche

**1.** Härtbare Zusammensetzung, die umfaßt eine Mischung aus den folgenden wirksamen Komponenten:

A) mindestens ein Vertreter, ausgewählt aus der Gruppe, die besteht aus einem Polyester, einem Ätherester-Blockcopolymer, einem Vinylpolymer, einer Diallylphthalat-Verbindung, einem Diallylphthalat-Copolymer und einer Epoxyverbindung, wobei die Komponente (A) in ihrem Molekül mindestens eine Silylgruppe der Formel (I) aufweist:

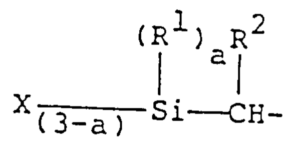

(I)

worin bedeuten:

| | |
|---|---|
| $R^1$ und $R^2$, | die gleich oder verschieden sind, jeweils ein Wasserstoffatom oder eine monovalente Kohlenwasserstoffgruppe mit 1 bis 10 Kohlenstoffatomen, ausgewählt aus der Gruppe, die besteht aus einer Alkylgruppe, einer Arylgruppe und einer Aralkylgruppe; |
| X | ein Halogenatom oder eine Gruppe, die ausgewählt wird aus der Gruppe, die besteht aus einer Alkoxylgruppe, einer Acyloxylgruppe, einer Ketoxymatgruppe, einer Amidgruppe, einer Säureamidgruppe, einer Aminoxygruppe und einer Mercaptogruppe, und |
| a | die Zahl 0, 1 oder 2, |

B) eine Organozinnverbindung und

C) eine Mercaptogruppen-haltige Verbindung, ausgewählt aus der Gruppe, die besteht aus einem Alkylmercaptan, einer Mercaptogruppen-haltigen Carbonsäure, einer Mercaptogruppen-haltigen Esterverbindung, einem Mercaptogruppenhaltigen Polyäther und einem Mercaptogruppen-haltigen Thiophenol und Thiobenzoesäure,

wobei die Menge der Komponente (B) 0,0001 bis 50 Gew.-Teile, bezogen auf 100 Gew.-Teile der Verbindung (A), und die Menge der Komponente (C) 0,000005 bis 1000 Gew.-Teile, bezogen auf 100 Gew.-Teile der Verbindung (A), betragen.

**2.** Zusammensetzung nach Anspruch 1, worin die Komponente (A) ein Polyester mit einem Molekulargewicht von 300 bis 8000 ist.

**3.** Zusammensetzung nach Anspruch 1, worin die Komponente (A) ein Ätherester-Blockcopolymer mit einem Molekulargewicht von 300 bis 20 000 ist.

**4.** Zusammensetzung nach Anspruch 1, worin die Komponente (A) ein Vinylpolymer mit einem Molekulargewicht von 300 bis 20 000 ist.

**5.** Zusammensetzung nach Anspruch 1, worin die Komponente (A) ein Diallylphthalatmonomer ist.

**6.** Zusammensetzung nach Anspruch 1, worin die Komponente (A) ein Diallylphthalat-Prepolymer mit einem Molekulargewicht von nicht mehr als 20 000 ist.

**7.** Zusammensetzung nach Anspruch 1, worin die Komponente (A) ein Copolymer von Diallylphthalat und einem Acrylsäure- oder Methacrylsäureester ist, wobei das Copolymer ein Molekulargewicht von 300 bis 20 000 aufweist.

**8.** Zusammensetzung nach Anspruch 3, worin ein Ätherrest in dem Ätherester-Blockcopolymer ein Molekulargewicht von 100 bis 500 hat.

**9.** Zusammensetzung nach Anspruch 4, worin das Vinylpolymer ein Vinylpolymer ist, das einen Acrylsäureester oder einen Methacrylsäureester enthält.

**10.** Zusammensetzung nach Anspruch 7, worin der Gehalt an Diallylphthalat 5 bis 100 Mol-% beträgt.

**11.** Zusammensetzung nach Anspruch 1, worin die Komponente (C) n-Dodecylmercaptan ist.

**12.** Verfahren zur Herstellung einer härtbaren Zusammensetzung, die als wirksme Komponenten enthält:
A) mindestens einen Vertreter, ausgewählt aus der Gruppe, die besteht aus einem Polyester, einem Ätherester-Blockcopolymer, einem Vinylpolymer, einer Diallylphthalat-Verbindung, einem Diallylphthalat-Copolymer und einer Epoxyverbindung, wobei die Komponente (A) in ihrem Molekül mindestens eine Silylgruppe der Formel (I) aufweist:

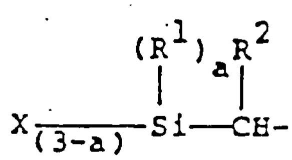

(I)

worin bedeuten:

- $R^1$ und $R^2$, die gleich oder verschieden sind, jeweils ein Wasserstoffatom oder eine monovalente Kohlenwasserstoffgruppe mit 1 bis 10 Kohlenstoffatomen, ausgewählt aus der Gruppe, die besteht aus einer Alkylgruppe, einer Arylgruppe und einer Aralkylgruppe;
- X ein Halogenatom oder eine Gruppe, die ausgewählt wird aus der Gruppe, die besteht aus einer Alkoxylgruppe, einer Acyloxylgruppe, einer Ketoxymatgruppe, einer Amidgruppe, einer Säureamidgruppe, einer Aminoxygruppe und einer Mercaptogruppe, und
- a die Zahl 0, 1 oder 2,

B) eine Organozinnverbindung und
C) eine Mercaptogruppen-haltige Verbindung, ausgewählt aus der Gruppe, die besteht aus einem Alkylmercaptan, einer Mercaptogruppen-haltigen Carbonsäure, einer Mercaptogruppen-haltigen Esterverbindung, einem Mercaptogruppenhaltigen Polyäther und einem Mercaptogruppen-haltigen Thiophenol und Thiobenzoesäure,
wobei die Menge der Komponente (B) 0,0001 bis 50 Gew.-Teile, bezogen auf 100 Gew.-Teile der Verbindung (A), und die Menge der Komponente (C) 0,000005 bis 1000 Gew.-Teile, bezogen auf 100 Gew.-Teile der Verbindung (A), betragen, dadurch gekennzeichnet, daß die Verbindungen (B) und (C) mit einem getrennt hergestellten Harz (A) gemischt werden.

**13.** Verfahren nach Anspruch 12, worin die Komponente (A) ein Polyester mit einem Molekulargewicht von 300 bis 8000 ist.

**14.** Verfahren nach Anspruch 12, worin die Komponente (A) ein Ätherester-Blockcopolymer mit einem Molekulargewicht von 300 bis 20 000 ist.

**15.** Verfahren nach Anspruch 12, worin die Komponente (A) ein Vinylpolymer mit einem Molekulargewicht von 300 bis 20 000 ist.

**16.** Verfahren nach Anspruch 12, worin die Komponente (A) ein Diallylphthalat-Monomer ist.

**17.** Verfahren nach Anspruch 12, worin die Komponente (A) ein Diallylphthalat-Prepolymer mit einem Molekulargewicht von nicht mehr als 20 000 ist.

**18.** Verfahren nach Anspruch 12, worin die Komponente (A) ein Copolymer von Diallylphthalat und einem Acrylsäure- oder Methacrylsäureester ist, wobei das Copolymer ein Molekulargewicht von 300 bis 20 000 hat.

**19.** Verfahren nach Anspruch 14, worin ein Ätherrest in dem Ätherester-Blockcopolymer ein Molekulargewicht von 100 bis 500 hat.

**20.** Verfahren nach Anspruch 15, worin das Vinylpolymer ein Vinylpolymer ist, das einen Acrylsäureester oder einen Methacrylsäureester enthält.

**21.** Verfahren nach Anspruch 18, worin der Gehalt an Diallylphthalat 5 bis 100 Molprozent beträgt.

**22.** Verfahren nach Anspruch 12, worin die Komponente (C) n-Dodecylmercaptan ist.

**Revendications**

**1.** Composition durcissable comprenant un mélange des composants efficaces :

(A) au moins un élément choisi parmi un polyester, un copolymère séquencé éther-ester, un polymère vinylique, un composé de phtalate de diallyle, un copolymère de phtalate de diallyle et un composé époxy, le composant (A) portant dans sa molécule au moins un groupe silyle répondant à la formule (I):

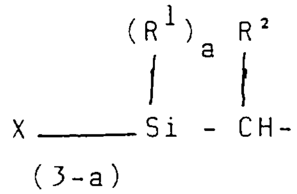

dans laquelle $R^1$ et $R^2$ peuvent être identiques ou différents et chacun représente un atome d'hydrogène ou un radical hydrocarboné monovalent de 1 a 10 atomes de carbone, choisi parmi le groupe consistant en les groupes consistant en les groupes allcyle, aryle et aralkyle ; X est un atome d'halogène ou un composé choisi parmi un groupe consistant en les groupes alcoxyle, acyloxyle, cétoxymate, amide, amide-acide, aminoxy ou mercapto ; et a est 0, 1 ou 2,

(B) un compose d'organo-étain ; et

(C) un composé contenant un groupe mercapto choisi parmi le groupe consistant en les groupes alkyl-mercaptan, acide carboxylique contenant un groupe mercapto, un ester contenant un groupe mercapto, un polyéther contenant un groupe mercapto et un thiophénol ou acide thiobenzoïque contenant un groupe mercapto, de sorte que la quantité du composant (B) est de 0,0001 à 50 parties pour 100 parties en poids du compose (A) et la quantité du composant (C) est de 0,000005 à 1000 parties en poids pour 100 parties en poids du composé (A).

**2.** Composition selon la revendication 1, dans laquelle ledit composant (A) est un polyester ayant une masse moléculaire de 300 à 8000.

**3.** Composition selon la revendication 1, dans laquelle ledit composant (A) est un copolymère séquencé éther/ester ayant une masse moléculaire de 300 à 20.000.

**4.** Composition selon la revendication 1, dans laquelle ledit composant (A) est un copolymère vinylique d'une masse moléculaire de 300 à 20.000.

**5.** Composition selon la revendication 1, dans laquelle ledit composant (A) est un phtalate de diallyle monomère.

**6.** Composition selon la revendication 1, dans laquelle ledit composant (A) est un phtalate de diallyle prépolymère ayant une masse moléculaire qui ne dépasse pas 20.000.

**7.** Composition selon la revendication 1, dans laquelle ledit composant (A) est un copolymère phtalate de diallyle/ester acrylique ou méthacrylique, ledit copolymère ayant une masse moléculaire de 300 à 20.000.

**8.** Composition selon la revendication 3, dans laquelle le fragment éther dans ledit copolymere séquencé éther/ester présente une masse moléculaire de 100 à 500.

**9.** Composition selon la revendication 4, dans laquelle ledit polymère vinylique contient un ester acrylique ou méthacrylique.

**10.** Composition selon la revendication 7, dans laquelle la teneur en phtalate de diallyle est de 5 à 100 par mole.

**11.** Composition selon la revendication 1, dans laquelle ledit composant (C) est le n-dodécyl-mercaptan.

**12.** Procédé de préparation d'une composition durcissable comprenant à titre de composants efficaces :
(A) au moins un élément choisi parmi le groupe consistant en polyester, un co- polymère sequencé éther-ester, un polymère vinylique, un composé de phtalate de diallyle, un copolymère de phtalate de diallyle et un composé époxy, le composant (A) portant dans sa molécule au moins un groupe silyle répondant à la formule (I) :

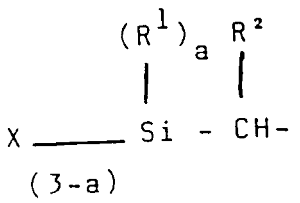

(I)

dans laquelle $R^1$ et $R^2$ peuvent être identiques ou différents et chacun représente un atome d'hydrogène ou un radical hydrocarboné monovalent de 1 a 10 atomes de carbone, choisi parmi le groupe consistant en les radicaux alykle, aryle et aralkyle ; X est un atome d'halogène ou un composé choisi parmi le groupe consistant en ces groupes alcoxyle, acyloxyle, cétoxymate, amide, amide-acide, aminoxy ou mercapto; et a est 0, 1 ou 2,
(B) un composé d'organo-étain ; et
(C) un composé contenant un groupe mercapto choisi parmi le groupe consistant en un alkyl-mercaptan, un acide carboxylique contenant un groupe mercapto, un ester contenant un groupe mercapto, un polyéther contenant un groupe mercapto et un thiophénol ou acide thiobenzoïque contenant un groupe mercapto, de sorte que la quantité du composant (B) est de 0,0001 à 50 parties pour 100 parties en poids du composé (A) et la quantité du composant (C) est de 0,000005 à 1000 parties en poids pour 100 parties en poids du composé (A), caractérisé en ce qu'on mélange les composés (B) et (C) avec une résine préparée séparément (A).

**13.** Procédé selon la revendication 12, dans lequel ledit composant (A) est un polyester ayant une masse moléculaire de 300 à 8000.

**14.** Procédé selon la revendication 12, dans lequel ledit composant (A) est un copolymère séquencé éther/ester ayant une masse moléculaire de 300 à 20.000.

**15.** Procédé selon la revendication 12, dans lequel ledit composant (A) est un polymère vinylique ayant une masse moléculaire de 300 à 20.000.

**16.** Procédé selon la revendication 12, dans lequel ledit composant (A) est un phtalate de diallyle monomère.

**17.** Procédé selon la revendication 12, dans lequel ledit composant (A) est un phtalate de diallyle prépolymère ayant une masse moléculaire qui ne dépasse pas 20.000.

**18.** Procédé selon la revendication 12, dans lequel ledit composant (A) est un copolymère phtalate de diallyle/ester acrylique ou méthacrylique, ledit copolymère aant une masse molèculaire de 300 à 20.000.

**19.** Procédé selon la revendication 14, dans lequel un fragment éther dans ledit copolymère séquencé éther/ester présente une nasse moléculaire de 100 à 500.

**20.** Procédé selon la revendication 15, dans lequel ledit polymère vinylique contient un ester acrylique ou méthacrylique.

**21.** Procédé selon la revendication 18, dans lequel la teneur en phtalate de diallyle est comprise entre 5 et 100% par mole.

**22.** Procédé selon la revendication 12, dans lequel ledit composant (C) est le n-dodécylmercaptan.